# EUROPÄISCHE PATENTANMELDUNG

(11) **EP 1 026 570 A2**
(43) Veröffentlichungstag der Anmeldung: **09.08.2000**
(21) Anmeldenummer: 00100797.0
(22) Anmeldetag: 15.01.2000
(51) Int. Cl.: G06F 1/00

(54) **Verfahren zur Verifizierung der Identität einer Person**

(30) Priorität: 04.02.1999 DE 19904440
(71) Anmelder: Bartmann, Dieter, 85435 Erding (DE)
(72) Erfinder: Bartmann, Dieter, 85435 Erding (DE)
(74) Vertreter: LOUIS, PÖHLAU, LOHRENTZ & SEGETH

(57) **Zusammenfassung**

Vorgeschlagen wird Verfahren zur Verifizierung der Identität einer Person, die eine Tastatur bedient, welche mit einer elektronischen Datenverarbeitungsanlage, Signalverarbeitungsanlage oder SmartCard verbunden ist, in welche ein Referenzmuster eingegeben wird, das mit einem einzugebenden Verifikationsmuster verglichen wird, wobei als Referenzmuster ein Signal begrenzten Umfangs eingegeben wird, das auf einer Sequenz von Tastendrucken mit bestimmten Stärken und/oder durch eine Sequenz mit Tastendrucken nach einem bestimmten Rhythmus und/oder einer/mehrerer Überlappungen von Tastendrucken besteht.

## Beschreibung

Ein unbefugter Zugriff auf Daten, die in einem Rechner abgelegt sind, die unerlaubte Benutzung von Computerprogrammen, eine unsichere oder fehlende Identitätsprüfung beim Zugang zu Online Services oder bei Interactive TV, die mißbräuchliche Verwendung von magnetstreifen- bzw. chipbehafteten Bankkarten sowie das Fehlen einer nachweisbaren Zuordnung eines am Computer erstellten Datenobjektes zum Ersteller können zu großen wirtschaftlichen und gesellschaftlichen Schäden führen. Dasselbe gilt für den Zutritt zu geschützten Bereichen in Gebäuden. Der Nachweis, daß eine Person diejenige ist, die sie zu sein vorgibt (die sog. Verifikation der Identität), ist deshalb sehr wichtig.

Die Verifikation der Identität geschieht in den weitaus meisten Fällen dadurch, daß der Benutzer ein vereinbartes Codewort (Paßwort, persönliche Identifikationsnummer, Benutzernummer etc.) angeben muß. Dieses Codewort wird von mir im folgenden stets Paßwort genannt. Der damit erzielbare Schutz steht und fällt mit der Geheimhaltung bzw. Nicht-Erratbarkeit des Paßwortes.

Damit ein Paßwort nicht leicht erraten werden kann, muß es einigermaßen kompliziert sein und häufig gewechselt werden. Dies stößt jedoch auf Widerwillen beim Benutzer, denn er sollte es auswendig wissen, was bei einem komplizierteren Paßwort (es darf z.B. in keinem Wörterbuch vorkommen) schwierig ist. Falls er es aufgezeichnet hat, muß er diese Aufzeichnung einerseits für sich schnell zugänglich und andererseits für jede andere Person unzugänglich aufbewahren. Dies ist ein kaum lösbares Problem. Hier mangelt es am Arbeitsplatz oft an der nötigen Sorgfalt. Die praktische Erfahrung zeigt, daß sich eine hundertprozentige Geheimhaltung des Paßwortes nicht durchsetzen läßt. Dies gilt ebenso im privaten Bereich.

Das Paßwort wirkt darüber hinaus höchstens während des Zeitraums seiner Eingabe verifizierend. Anschließend kann der Benutzer wechseln, ohne daß dies vom Computersystem bemerkt wird. Es ist auch möglich, den Benutzer zu einer unfreiwilligen Freigabe des Paßwortes zu bewegen.

Insgesamt genügt der Paßwortschutz wegen seiner mangelnden Praktikabilität, wegen der ungenügenden Geheimhaltung und wegen der nur auf einen Zeitpunkt bezogenen Überprüfung den steigenden Sicherheitsbedürfnissen nur unzureichend.

Modernere Verifikationssysteme arbeiten mit biometrischen Merkmalen, z.B. dem Fingerabdruck, dem Augenhintergrund, der Stimme, dem Gesicht, der Sprechmimik etc. Sie besitzen aber ebenfalls spezifische Nachteile. So benötigen sie spezielle Hardware, saubere Finger, geringe Hintergrundgeräusche, ausreichende Lichtverhältnisse etc., so daß sie derzeit nur in speziellen Situationen zu Anwendung kommen.

Dasselbe gilt für Verfahren, welche die Unterschrift einer Person verwenden. Schreibdynamik und Druck werden analysiert und zu einem digitalen Signal verarbeitet (sh. Patentschrift DE 197 01 685 A1). Die Idee besteht darin, Mermale der Schreibdynamik zu verwenden, welche die Schrift einer Person über einen langen Zeitraum hinweg aufweist und meist dieser Person unbewußt ist.

Eine interessante Alternative bietet in Analogie zum Schreibverhalten das Tippverhalten auf einer Tastatur.

Die Art, wie ein Mensch eine Tastatur (Computertastatur oder Ziffernblock) bedient (Schreibdynamik, Druck, Auswahl der Tasten, Schreibrhythmus, Schreibgewohnheiten,...), hat nicht dem Willen unterliegende Ausprägungen. Ausführliche Untersuchungen an der Technischen Universität München und an der Universität Regensburg haben gezeigt, daß die Art des Tippens sehr personentypisch ist. In ihrer Ganzheit bilden die einzelnen Eigenheiten des Tippens ein für die Person charakteristisches biometrisches Merkmal "Tippverhalten". Es kann mit Hilfe komplizierter mathematischer Verfahren hinreichend exakt aus den elementaren Meßdaten Drücken und Loslassen einer Taste berechnet werden.

Die Idee, die Schreibdynamik einer Person auf einer Tastatur als biometrisches Merkmal zu verwenden, ist in US 4,805,222 offenbart. Eine Verbesserung wurde mit der Idee erzielt, neben der Schreibdynamik auch dynamikunabhängige Merkmale heranzuziehen (sh. Patentschrift 196 31 484.4).

Das biometrische Verfahren Tippverhalten funktioniert um so besser, je umfangreicher die Tippprobe ist, die der Benutzer abgibt. Dies läuft jedoch der Bequemlichkeit des Benutzers zuwider. In zahlreichen Situationen, so z.B. bei Zutrittskontrollsystemen an Türen, die täglich von vielen Personen durchschritten werden, oder bei Geldausgabeautomaten, ist ein Verfahren nur dann praktikabel, wenn die Verifikation sehr schnell geht.

Der Erfindung liegt daher die Aufgabe zugrunde, ein Verfahren zur Verifizierung der Identität einer Person zu schaffen, das bei einem hohen Grad an Verifikationssicherheit sehr einfach in der Anwendung und auf den gängigen technischen Ausrüstungen universell einsetzbar ist.

Diese Aufgabe wird mit den Merkmalen im Anspruch 1 bzw. mit den Merkmalen im Anspruch 4 bzw. mit den Merkmalen im Anspruch 6 bzw. mit den Merkmalen in Anspruch 9 gelöst.

Als Druckfühler kann ein sog. Sensorchipz verwendet werden, der den elektronischen Fingerprint abnimmt. Ist dieser Sensor auch druckempfindlich ausgelegt, so kann er ebenfalls als Taste betrachtet werden.

Das als Referenzmuster dienende Signal kann also sein
- eine Sequenz von Tastendrucken mit bestimmten Stärken: das Signal besteht in der Abfolge von Einzeldrucken in ihrer jeweiligen charakteristischen Intensität (Druckmuster)
- eine Sequenz von Drucken nach einem bestimmten Rhythmus: das Signal besteht im Rhythmus
- eine Überlappung von Tastendrucken, d.h. eine zweite Taste wird gedrückt, noch ehe die erste Taste losgelassen wurde. Auch Überlappungen über mehrere Tastenanschläge hinweg sind möglich. Als Spezialfall ist auch ein gleichzeitiges Drücken mehrerer Tasten enthalten.
- eine Kombination einiger oder aller dieser Signale. Als Kombination der ersten beiden Signalarten soll auch der genauere Druckverlauf als Funktion der Zeit gelten.

So könnte man als Signal z.B. den Anfang eines Liedes oder einige Morsezeichen auf den Tasten bzw. der Taste tippen. Auch ist es möglich, den herkömmlichen Paßwortschutz zu verbessern, indem man dem Paßwort ein Signal überlagert. Es kommt dann nicht nur darauf an, das richtige Paßwort einzugeben, sondern auch das richtige Signal, d.h. das Paßwort in der richtigen, bewußt gewählten Weise zu tippen, z.B. nach einem bestimmten Rhythmus. Der Vorteil besteht darin, daß an die Kompliziertheit und an die Geheimhaltung des Paßworts keine so großen Anforderungen zu stellen sind.

So wie man bei der Verwendung des Paßworts vom Paßwortschutz spricht, bezeichne ich die Lösungsidee als Signalschutz.

Mit dem Tippverhalten alleine ist die gestellte Aufgabe bei einigen Anwendungsszenarien kaum in der für den praktischen Einsatz geforderten Qualität zu lösen.

Man teilt bei Verifikationsaufgaben die verwendeten Merkmale in die drei Klassen ein
- Wissensmerkmale (z.B. Paßwort)
- Habenmerkmale (z.B. Schlüssel, Chipkarte, Ausweis)
- Seinsmerkmale (z.B. Fingerprint, Retina).

Das Signal ist ein Wissensmerkmal.

Das Tippverhalten ist als Art, wie ein Individuum einen Text tippt, ein Seinsmerkmal wie ein Fingerabdruck (vgl. Patentschrift Nr. 4,805,222, Spalte 2, Zeile 7-10). Es bezieht sich nicht auf ein ausgewähltes Wort sondern ist unabhängig vom konkreten Text generell definiert. Die bestimmenden Größen sind die Fingerfertigkeit beim Tippen, der Geübtheitsgrad beim Umgang mit der Tastatur sowie die augenblickliche psychische und physische Verfassung der Person (z.B. Stress, Übermüdung). Im Gegensatz dazu ist das Signal ein bewußt gewähltes Wissensmerkmal.

Das Template, welches die Eigenheiten des Tippverhaltens repräsentiert, besteht aus statistischen Kenngrößen, z.B. der mittleren Anschlagsdauer einer Taste. Der eingegebene Text bei der Verifikationsprozedur muß deshalb nicht identisch mit dem Text in der Enrollmentprozedur sein.

Beim Signalschutz kommt es darauf an, das beim Enrollment eingetragene Signal möglichst genau wiederzugeben.

Beim Tippverhalten geschieht der Vergleich i.a. nicht direkt anhand der Strings sondern indirekt auf der Ebene der abgeleiteten Templates.

Bei der obigen Lösungsidee wird das Signal direkt mit dem autorisierten Referenzsignal, das in der Enrollmentprozedur erhoben wurde, verglichen.

Das Tippverhalten charakterisiert die Art, wie ein Text auf einer Tastatur getippt wird. Um das Tippverhalten zu messen, ist eine alphanumerische Tastatur notwendig (siehe Anspruch 1 in Patentschrift Young et al.).

Zur Erzeugung des Signals hingegen genügt bereits eine einzige Taste.

Anders als das Paßwort, welches alphanumerisch und deshalb als Wissensmerkmal eindeutig ist, hat das Signal i.d.R. einen analogen Charakter.

Das Wissensmerkmal des Paßworts besteht in der richtigen Folge von alphanumerischen Zeichen.

Das Wissensmerkmal des Signals besteht in Druck und/oder Rhythmus und/oder bei Überlappungen in der richtigen Folge der Ereignisse "Taste drücken" und "Taste loslassen".

Das Paßwort kann durch das unberechtigte Beobachten der Eingabe leicht ausgespäht werden.

Das Signal kann bei Einbeziehung des Druckes optisch nicht vollständig erfaßt werden. Auch ohne Einbeziehung des Druckes ist das Ausspähen viel schwieriger.

Der Paßwortschutz verlangt mehrere Tasten. Der Signalschutz kommt auch mit einer einzigen Taste aus.

Das Signal kann dem Paßwort als orthogonales Merkmal überlagert werden.

Das Verfahren kann überall dort eingesetzt werden, wo eine Tastatur vorhanden ist bzw. sinnvoll erscheint. Als Tastaturen kommen infrage
- Computertastatur: Anwendungsgebiete sind Zugriff auf Rechnerressourcen (Login in Rechnernetzen, Zugriff zu Betriebssystemen) sowie zu Software-Applikationen (geschützte Programme und Daten)
- Stationär montierter Ziffernblock: Anwendungsgebiete sind Zugangssicherungssysteme (Zugang zu Räumen, zu Tresoren) sowie Zugriffssicherungssysteme (bei Ladenkassen, Telefonen, Geldausgabeautomaten, SB-Terminals)
- Mobiler Ziffernblock: Anwendungsgebiet ist die Zugriffssicherung (zum Handy, zur TV-Fernbedienung).
- einzelne Taste, evtl. als Drucksensor, evtl. in Verbindung mit einem Fingerprint-Sensor: Anwendungsgebiete wie oben, zusätzlich: Deaktivierung der Wegfahrsperre im KFZ, Aktivierung sicherheitsrelevanter Funktionen im Chip auf der SmartCard (Drucksensor als druckempfindliche Zone auf der Karte).

Eine spezielle Anwendungsform auf diesen Endgeräten ist das Electronic Banking und das SB-Banking. Das Verfahren läßt sich hier universell auf allen elektronischen Vertriebskanälen der Bank vom Internet Banking bis hin zum Handy Banking einsetzen.

### Folgende Vorteile sind zu erwarten:

Der Kunde muß sich nicht an verschiedene Verfahren gewöhnen.

Das Verfahren kann an das jeweils geforderte Sicherheitsniveau angepaßt werden, ohne daß der Benutzer dadurch zusätzlich belästigt wird. Der dabei verwendete Parameter ist der Grad der Exaktheit, mit der das Signal eingegeben wird.

Das Verfahren setzt als Softwarelösung auf der gegenwärtig verbreiteten IT-Infrastruktur auf und kann sich deshalb rasch verbreiten.

Jedes biometrische Verfahren hat spezifische Vorteile und auch Nachteile. Letztere kann man durch die Kombination mit einem zweiten Verfahren kompensieren. Das vorgestellte Verfahren ist hierzu ein idealer Partner, da keine zusätzliche Hardware notwendig ist.

Zur technischen Realisierung ist eine Tastatur notwendig, die eine Verbindung zu einer elektronischen Datenverarbeitungsanlage aufweist. Diese kann ein Computer, aber auch ein Prozessorchip auf einer SmartCard oder ein Analogrechner sein. Auf der Tastatur wird das Signal eingegeben. Die Signalauswertung geschieht in der Datenverarbeitungsanlage.

### Enrollment:

Der Benutzer gibt ein von ihm frei gewähltes Signal als Referenzsignal ein. Dies kann auch mehrmals hintereinander geschehen. Je nachdem erhält man ein oder mehrere Referenzsignale, die evtl. noch weiter aufbereitet werden können. Das Referenzsignal/die Referenzsignale wird/werden in einem nicht jedermann zugänglichen Datenspeicher abgelegt. Dieser Datenspeicher kann auch ein geschützter Bereich im Prozessor der Chipkarte sein.

### Verifikation:

Der Benutzer gibt auf der Tastatur das vereinbarte Signal ein. Es wird auf einer elektronischen Daten-/Signalverarbeitungsanlage (oder auf der SmartCard) mit dem Referenzsignal verglichen. Die Verifikation der Identität des Benutzers geschieht in Abhängigkeit vom Ergebnis dieses Vergleichs.

### Identifikation:

In geschlossenen Benutzergruppen läßt sich das Verfahren auch zur Identifikation eines Mitglieds der Gruppe heranziehen. Der Benutzer gibt sein Signal ein. Es wird mit allen Referenzsignalen der Gruppenmitglieder verglichen. Die Identifikation geschieht in Abhängigkeit von der Vergleichsprüfung. Liefert diese Prüfung für genau eine Person eine hinreichend große Ähnlichkeit von Signal und Referenzsignal, so wird der Benutzer als der diesem Referenzsignal zugehörige Person identifiziert.

## Patentansprüche

1. Verfahren zur Verifizierung der Identität einer Person, die eine Tastatur bedient, welche mit einer elektronischen Datenverarbeitungsanlage, Signalverarbeitungsanlage oder SmartCard verbunden ist, in welche ein Referenzmuster eingegeben wird, das mit einem einzugebenden Verifikationsmuster verglichen wird, wobei als Referenzmuster ein Signal begrenzten Umfangs eingegeben wird, das auf einer Sequenz von Tastendrucken mit bestimmten Stärken und/oder durch eine Sequenz mit Tastendrucken nach einem bestimmten Rhythmus und/oder einer/mehrerer Überlappungen von Tastendrucken besteht.

2. Verfahren nach Anpruch 1, wobei das Signal bei der Auswahl der Tasten ganz oder teilweise eine vorgegebene Reihenfolge einhält.

3. Verfahren nach Anspruch 1 oder 2, wobei statistische Meßgrößen, welche die Variation der Signale bei öfterem Eingeben beschreiben, zur Verifizierung herangezogen werden.

4. Verfahren zur Verifizierung der Identität einer Person, die eine einzige Taste bedient, welche mit einer elektronischen Datenverarbeitungsanlage, Signalverarbeitungsanlage oder SmartCard verbunden ist, in welche ein Referenzmuster eingegeben wird, das mit einem einzugebenden Verifikationsmuster verglichen wird, wobei als Referenzmuster ein Signal begrenzten Umfangs eingegeben wird, das durch eine Sequenz mit Tastendrucken mit bestimmten Stärken und/oder nach einem bestimmten Rhythmus gebildet wird.

5. Verfahren nach Anspruch 4, wobei statistische Meßgrößen, welche die Variationen der Signale bei öfterem Eingeben beschreiben, zur Verifizierung herangezogen werden.

6. Verfahren zur Verifizierung der Identität einer Person, die eine Anordnung von Drucksensoren bedient, welche mit einer elektronischen Datenverarbeitungsanlage, Signalverarbeitungsanlage oder SmartCard verbunden ist, in welche ein Referenzmuster eingegeben wird, das mit einem einzugebenden Verifikationsmuster verglichen wird, wobei als Referenzmuster ein Signal begrenzten Umfangs eingegeben wird, das auf einer Sequenz von Drucken der Drucksensoren mit bestimmten Stärken und/oder durch eine Sequenz von Drucken der Drucksensoren nach einem bestimmten Rhythmus und/oder einer/mehrerer Überlappungen von Drucken der Drucksensoren besteht.

7. Verfahren nach Anpruch 6, wobei das Signal bei der Auswahl der Drucksensoren ganz oder teilweise eine vorgegebene Reihenfolge einhält.

8. Verfahren nach Anspruch 6 oder 7, wobei statistische Meßgrößen, welche die Variation der Signale bei öfterem Eingeben beschreiben, zur Verifizierung herangezogen werden.

9. Verfahren zur Verifizierung der Identität einer Person, die einen einzigen Drucksensor bedient, welcher mit einer elektronischen Datenverarbeitungsanlage, Signalverarbeitungsanlage oder SmartCard verbunden ist, in welche ein Referenzmuster eingegeben wird, das mit einem einzugebenden Verifikationsmuster verglichen wird, wobei als Referenzmuster ein Signal begrenzten Umfangs eingegeben wird, das durch eine Sequenz von Drucken des Drucksensors mit bestimmten Stärken nach einem bestimmten Rhythmus besteht.

10. Verfahren nach Anspruch 9, wobei statistische Meßgrößen, welche die Variation der Signale bei öfterem Eingeben beschreiben, zur Verifizierung herangezogen werden.
